# EUROPÄISCHE PATENTSCHRIFT

(11) **EP 0 763 272 B1**
(45) Veröffentlichungstag und Bekanntmachung des Hinweises auf die Patenterteilung: **16.09.1998**
(21) Anmeldenummer: 95921772.0
(22) Anmeldetag: 29.05.1995
(51) Int. Cl.: H02H 9/02, H02H 3/44

(54) **SCHALTUNGSANORDNUNG ZUR STROMBEGRENZUNG**
CIRCUIT FOR LIMITING CURRENT
CIRCUIT DE LIMITATION DE COURANT

(30) Priorität: 01.06.1994 EP 94108488
(43) Veröffentlichungstag der Anmeldung: 19.03.1997
(73) Patentinhaber: SIEMENS AKTIENGESELLSCHAFT, 80333 München (DE)
(72) Erfinder: FRIEDL, Karl, D-86159 Augsburg (DE)
(86) Internationale Anmeldenummer: EP9502036
(87) Internationale Veröffentlichungsnummer: WO9533295

(56) Entgegenhaltungen:
- DE-A- 3 535 864
- US-A- 4 438 473

## Beschreibung

Die Erfindung bezieht sich auf eine wie im Oberbegriff des Patentanspruchs 1 angegebene Schaltungsanordnung zur Strombegrenzung.

Eine derartige Schaltungsanordnung ist bereits aus der DE-35 35 864-A1 bekannt. Im Längszweig der bekannten Schaltungsanordnung ist die Drain-Source-Strecke eines Feldeffekttransistors angeordnet. In Serie zur Drain-Source-Strecke des Feldeffekttransistors liegt ein Meßwiderstand als Stromsensor. Die am Meßwiderstand abfallende Spannung steuert einen bipolaren Transistor. Das Gate des Feldeffekttransistors ist sowohl über einen Widerstand an ein den Feldeffekttransistor leitend steuerndes Einschaltpotential als auch über die Emitter-Kollektorstrecke des bipolaren Transistors an ein den Feldeffekttransistor sperrendes Sperrpotential geführt. Mit Hilfe des Feldeffekttransistors wird ein im Anschluß an das Einschalten der Netzspannung fließender Ladestrom, der einen Kondensator auflädt, auf einen vorgegebenen Wert begrenzt.

Bei Baugruppen mit parallel zum Ein- oder Ausgang liegenden Kondensator treten beim Stecken unter Spannung oder beim Anschalten einer Spannung an den Kondensator hohe Ladeströme auf. Dies ist insbesondere dann der Fall, wenn Baugruppen, die Pufferkondensatoren für die Stromversorgung besitzen, während des Betriebs auf Leiterplatten mit spannungsführenden Busleitungen geringer Impedanz gesteckt werden. Solche Pufferkondensatoren können insbesondere am Eingang von getakteten Stromversorgungsgeräten oder an Ausgängen von Stromversorgungsgeräten liegen, die zwecks redundanter Speisung von Verbrauchern einander parallel geschaltet sind.

Mit Hilfe einer Schaltungsanordnung zur Strombegrenzung mit Feldeffekttransistor und Strommeßwiderstand kann man den Ladestrom beim Stecken oder Anlegen der Betriebsspannung und auch im Betrieb begrenzen. Diese Begrenzung besitzt allerdings eine typische Reaktionszeit von einigen Mikrosekunden. Werden Baugruppen im Betrieb gezogen, so können durch Prellen der Steckkontakte kurze Nachladestromimpulse auftreten, die ein Vielfaches des statischen Begrenzungswerts erreichen. Dabei können insbesondere nachrichtentechnische Anordnungen, die sich auf Nachbarbaugruppen befinden, gestört werden.

Überlegungen im Rahmen der Erfindung haben ergeben, daß die genannten Schwierigkeiten dann nicht auftreten, wenn man anstatt den Strom selbst bereits die Anstiegsgeschwindigkeit des Stroms begrenzt.

Aufgabe der Erfindung ist es daher, eine wie im Oberbegriff des Patentanspruchs 1 angegebene Schaltungsanordnung derart auszubilden, daß sie nicht nur den Strom, sondern auch die Anstiegsgeschwindigkeit des Stromes wirksam begrenzt.

Gemäß der Erfindung wird die Schaltungsanordnung in der im kennzeichnenden Teil des Patentanspruchs 1 angegebenen Weise ausgebildet.

Durch diese Maßnahmen ergibt sich der Vorteil, daß die Begrenzungswirkung praktisch unverzögert einsetzt, so daß ein wirksamer Schutz gegen kurzzeitige Überströme beim Stecken einer Baueinheit oder beim Einschalten einer Anordnung mit Speicherkondensator erzielt wird. Von besonderem Vorteil dabei ist, daß auch relativ kurz aufeinanderfolgende Schaltvorgänge, wie sie insbesondere durch Kontaktprellen verursacht werden, oder Überspannungsimpulse keine schädlichen kurzzeitigen Überströme bewirken können. Außerdem reduziert die begrenzte Anstiegsgeschwindigkeit Störbeeinflussungen von galvanisch verbundenen oder räumlich benachbarten Schaltungen. Die Schaltungsanordnung eignet sich daher besonders für eine Verwendung in Einrichtungen der elektrischen Nachrichtenübertragungstechnik, die hohe Anforderungen an die Vermeidung von Störbeeinflussungen stellen.

Beim Austauschen von Baugruppen im Betrieb werden auf dieselbe Leiterplatte aufgesetzte Baugruppen nicht durch hohe Ladeströme gestört, da die Schaltungsanordnung zur Strombegrenzung auch kurzzeitige Ladeströme während des Kontaktprellens sowohl beim Stecken als auch beim Ziehen definiert begrenzt.

Außerdem verhindert die Schaltungsanordnung gegebenenfalls eine Schädigung von Steckkontakten durch Überstrom. Die Begrenzung des Ladestroms gewährleistet auch, daß der Spannungsanstieg am Speicherkondensator bei im Betrieb auftretenden Überspannungen ebenfalls begrenzt wird. Auch ein Auslösen von Vorsicherungen beim Einschalten, Stecken oder bei Spannungsschwankungen im Betrieb ist wirksam verhindert.

Aus der US 4 438 473 ist bereits eine Schaltungsanordnung bekannt, die zur Speisung eines elektrischen Verbrauchers dient und eine Unterbrechung des Laststromes im Kurzschlußfall vorsieht. Ein im Längszweig der Schaltungsanordnung angeordneter, bei Normalbetrieb leitend gesteuerter bipolarer Transistor wird im Kurzschlußfall mit Hilfe eines Stromsensors in den gesperrten Zustand überführt. Der Stromsensor besteht aus einem Meßwiderstand mit in Serie zum Meßwiderstand angeordneter Drossel. Der als Unterbrecher dienende Transistor wird durch ein Flip-Flop gesteuert und arbeitet daher binär. Das Ausgangssignal des Flip-Flops wird auf seinem Weg zu dem als Unterbrecher dienenden Transistor beim Einschalten verzögert, um den Betrieb des Unterbrechers in Verbindung mit einer kapazitiven Last zu ermöglichen. Zum Schutz gegen eingangsseitige Überspannungen werden übliche Thyristoren verwendet.

Vorteilhafte Ausgestaltungen der Erfindung ergeben sich aus den Ansprüchen 2 bis 10.

Die Erfindung wird anhand der in den Figuren dargestellten Ausführungsbeispiele näher erläutert.

Es zeigen
- Fig. 1: eine Schaltungsanordnung zur Strombegrenzung mit einem n-Kanal-Feldeffekttransistor und einem npn-Transistor,
- Fig. 2: für die Schaltungsanordnung nach Fig. 1 ein Strom- und Spannungszeitdiagramm,
- Fig. 3: eine Schaltungsanordnung zur Strombegrenzung mit zusätzlich steuerbarem Feldeffekttransistor und
- Fig. 4: eine Schaltungsanordnung zur Strombegrenzung mit einem p-Kanal-Feldeffekttransistor und einem pnp-Transistor.

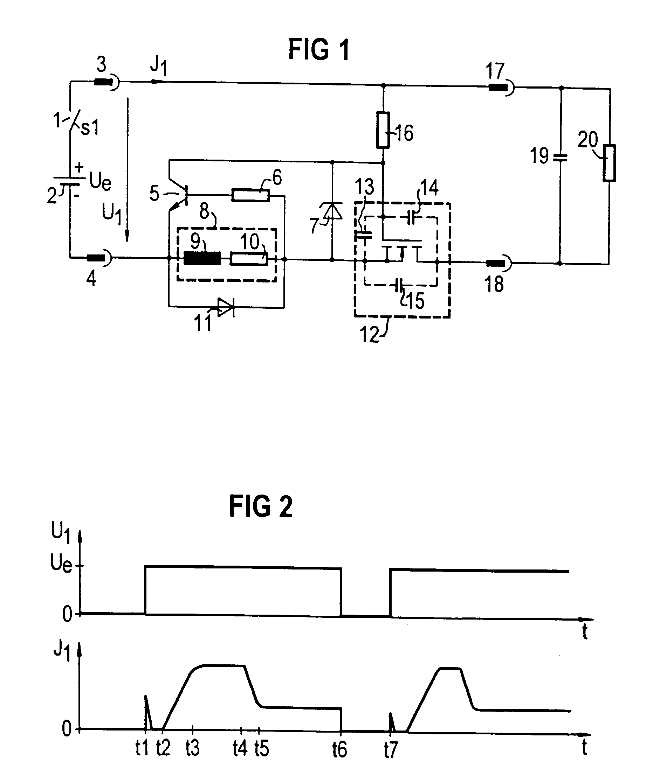

Die in Fig. 1 gezeigte Schaltungsanordnung enthält eine Vorrichtung zur Strombegrenzung, die zwischen der Versorgungsspannungsquelle 2 und dem Speicherkondensator 19 angeordnet ist und zugleich zur Einschaltstrombegrenzung und zum Überspannungsschutz dient.

Die Schaltungsanordnung zur Strombegrenzung ist über die Steckkontakte 3 und 4 eines in der Figur nicht näher dargestellten Vielfachsteckverbinders mit der Versorgungsspannungsquelle 2 und über die Steckkontakte 17 und 18 mit einem elektrischen Verbraucher verbindbar, der als Parallelschaltung von Speicherkondensator 19 und Lastwiderstand 20 dargestellt ist.

Der Speicherkondensator 19 ist auf der einen Seite über die Steckkontakte 17, 3 mit dem Pluspol der Versorgungsspannungsquelle 2 verbunden und auf der anderen Seite über den Steckkontakt 18, die Drain-Source-Strecke des Feldeffekttransistors 12, den dazu in Serie liegenden Stromsensor 8 und den Steckkontakt 4 mit dem Minuspol der Versorgungsspannungsquelle 2 verbunden.

Der Stromsensor 8 besteht aus dem Strommeßwiderstand 10 und der dazu in Serie angeordneten Drossel 9. Parallel zum Stromsensor 8 liegt die in bezug auf den Laststrom in Sperrichtung gepolte Diode 11, die für die Drossel 9 als Freilaufdiode wirkt.

Das Gate des als Stellglied dienenden Feldeffekttransistors 12 ist einerseits mit dem Kollektor des bipolaren Transistors 5 und andererseits über den Widerstand 16 an den Längszweig der Schaltungsanordnung geführt, der den Pluspol der Versorgungsspannungsquelle 2 mit dem Verbraucher 19, 20 verbindet. Parallel zur Gate-Source-Strecke des Feldeffekttransistors 12 liegt die Z-Diode 7. Die Z-Diode 7 ist so gepolt, daß sie die den Feldeffekttransistor 12 leitend steuernde Spannung auf den Wert ihrer Zenerspannung begrenzt.

Der Emitter des bipolaren Transistors 5 ist über den Steckkontakt 4 mit dem Minuspol der Versorgungsspannungsquelle 2 verbunden. Der Kollektor des Transistors 5 liegt am Gate des Feldeffekttransistors 12. Die Basis des Transistors 5 ist über den Widerstand 6 an den Verbindungspunkt von Stromsensor 8 und Source des Feldeffekttransistors 12 geführt.

Durch die strombegrenzende Wirkung der Schaltungsanordnung führen die in Versorgungsnetzen vorkommenden hohen aber kurzen Überspannungen nur zu einem geringen Anstieg der Spannung am Verbraucher 20. Die Spannungsdifferenz liegt am Feldeffekttransistor 12, der für diese Spannung bemessen ist. Nach dem Ende der Überspannung kehrt die Schaltungsanordnung wieder in den Normalzustand mit voll durchgesteuertem Feldeffekttransistor 12 zurück.

Der zu begrenzende Strom I1 fließt vom Pluspol der Eingangsquelle 2 über den geschlossenen Schalter 1, die Parallelschaltung aus Kondensator 19 und Widerstand 20, die Drain-Source-Strecke des Feldeffekttransistors 12 und den Stromsensor 8 zum Minuspol der Spannungsquelle 2.

Die Anstiegsgeschwindigkeit des Stromes I1 wird mittels der Drossel 9 gemessen und mit Hilfe des Feldeffekttransistors 12 begrenzt. Der erforderliche Induktivitätswert der Drossel 9 liegt, je nach Verhältnis von zu begrenzender Spannung und Meßspannung, um Größenordnungen unter dem Wert, der erforderlich wäre, wenn die Drossel selbst den Stromanstieg begrenzen müßte.

Der Ladestrom I1 tritt immer dann auf, wenn der Kondensator 19 durch Schließen des Schalters 1 bei verbundenen Steckkontakten 3, 4 und 17, 18 oder durch Stecken dieser Kontakte bei geschlossenem Schalter 1 mit der Speisespannung Ue verbunden wird.

Die Strombegrenzung erfolgt mittels des Feldeffekttransistors 12, der ein selbstsperrender n-Kanal-Mosfet ist und in Reihe zum kapazitiven Verbraucher 19, 20 angeordnet ist. Der Feldeffekttransistor 12 ist mit parasitären Kapazitäten behaftet. Die Gate-Source-Kapazität 13 liegt zwischen dem Gate und der Source, die Gate-Drain-Kapazität 14 zwischen dem Gate und dem Drain und die Source-Drain-Kapazität 15 zwischen der Source und dem Drain des Feldeffekttransistors 12.

Der Feldeffekttransistor 12 wird bei anliegender Spannung U1 über den hochohmigen Widerstand 16 durchgesteuert. Die Z-Diode 7 begrenzt die Ansteuerspannung und dient so zum Schutz des Feldeffekttransistors 12.

Der Widerstand 10 und der Wicklungswiderstand der Drossel 9 bilden die ohmsche Komponente des Stromsensors 8. Gegebenenfalls kann der Wicklungswiderstand der Drossel 9 allein diese ohmsche Komponente bilden, wobei der externe Widerstand 10 durch einen Kurzschluß zu ersetzen ist.

Falls die durch den Anstieg des Ladestromes und den Ladestrom selbst an Drossel 9 und Widerstand 10 erzeugte Spannung die Basis-Schwellenspannung des Transistors 5 überschreitet, wird der Transistor 5 leitend und beginnt, den Feldeffekttransistor 12 zu sperren. Auf diese Weise werden sowohl der Anstieg des Ladestromes I1 als auch der Ladestrom I1 selbst begrenzt.

Fig. 2 zeigt für die Schaltungsanordnung nach Fig. 1 den Verlauf des Ladestroms I1 beim Anlegen der Spannung U1 und beim Kontaktprellen unter Berücksichtigung der parasitären Kapazitäten 13, 14 und 15 des Feldeffekttransistors 12.

Im Einschaltzeitpunkt t1 springt die Spannung U1 von Null auf den Wert Ue. Wegen des zu diesem Zeitpunkt entladenen Kondensators 19 und der parasitären Kapazitäten 13 bis 15 des Feldeffekttransistors 12 springt damit auch die Spannung an der Drossel 9 und die Spannung zwischen Kollektor und Emitter des Transistors 5 auf den Wert der Eingangsspannung Ue. Über den Widerstand 6 fließt Basisstrom in den Transistor 5, so daß der Transistor 5 durchsteuert und den Strom zum Laden der parasitären Kapazitäten 13 und 14 und über die Z-Diode 7 auch den Strom zum Laden der parasitären Kapazität 15 übernimmt.

Der Widerstand 6 ist so bemessen, daß einerseits genügend Basisstrom zum schnellen Laden der parasitären Kapazitäten 13 bis 15 zur Verfügung steht und andererseits der Transistor 5 nicht überlastet wird.

Der Induktivitätswert von Drossel 9 ist zweckmäßigerweise so groß, daß der Hauptanteil des Ladestroms der parasitären Kapazitäten 13 bis 15 nicht über die Drossel 9, sondern über den Transistor 5 fließt. Hierdurch wird erreicht, daß der Transistor 5 den Feldeffekttransistor 12 über dessen Gate sicher sperrt. In Fig. 2 ist dieser Ladestrom als kurze Spitze zum Zeitpunkt tl zu erkennen.

Nach Abklingen des Ladestromes der parasitären Kapazitäten 13 bis 15 sperrt der Transistor 5. Der Feldeffekttransistor 12 wird dann über den Widerstand 16 wieder durchgesteuert, so daß zum Zeitpunkt t2 der Ladestrom für den die Verbraucherkapazität bildenden Kondensator 19 zu fließen beginnt. Durch die Induktivität der Drossel 9 ist, im Zusammenhang mit der Basisschwellenspannung des Transistors 5, die Anstiegsgeschwindigkeit des Stromes I1 begrenzt. Ab dem Zeitpunkt t3 erreicht der Spannungsabfall am Widerstand 10 die Basisschwellenspannung des Transistors 5, so daß der Strom I1 nicht mehr weiter ansteigt. Zum Zeitpunkt t4 ist der Kondensator 19 fast aufgeladen und der Ladestrom I1 beginnt zu sinken. Zum Zeitpunkt t5 ist der Kondensator 19 voll aufgeladen, so daß nur noch der Strom fließt, den der ohmsche Widerstand 20 des kapazitiven Verbrauchers 19, 20 aufnimmt.

Zum Zeitpunkt t6 beginnt eine kurze Unterbrechung der Spannung U1, z.B. durch ein Prellen der Steckkontakte 3 und/oder 4. Während dieser Unterbrechung wird der Kondensator 19 durch den Widerstand 20 teilweise entladen. Zum Zeitpunkt t7 kehrt die Spannung U1 wieder. Der Stromverlauf ab dem Zeitpunkt t7 entspricht dem Verhalten ab dem Zeitpunkt t1, wobei, je nach Ladezustand des Kondensators 19 zum Zeitpunkt t7, die Dauer des Ladevorganges kürzer ist. Die Strombegrenzung setzt dabei auch dann verzögerungsfrei und ohne den normalen Begrenzungswert übersteigende Spitzen ein, wenn die parasitären Kapazitäten 13 bis 15 des Feldeffekttransistors 12 noch nicht ganz entladen sind.

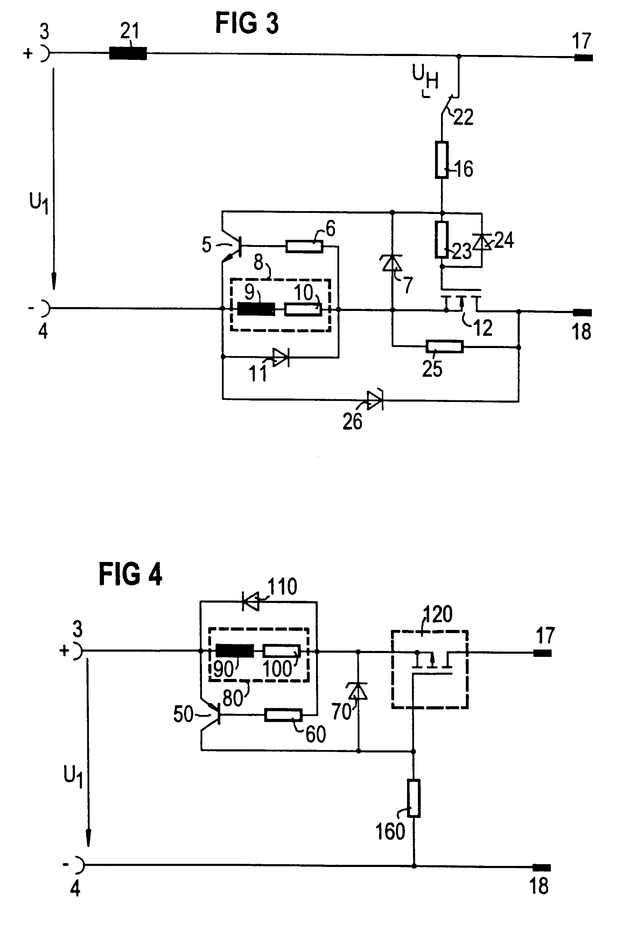

Fig. 3 zeigt eine Schaltungsanordnung zur Strombegrenzung, die mit der nach Fig. 1 weitgehend übereinstimmt. Zusätzlich ist zwischen dem Verbindungspunkt vom Kollektor des Transistors 5 und dem Widerstand 16 einerseits und dem Gate des Feldeffekttransistors 12 andererseits der Widerstand 23 vorgesehen. Parallel zum Widerstand 23 liegt die Diode 24. Die Diode 24 ist in bezug auf die über den Widerstand 16 zugeführte, den Feldeffekttransistor 12 leitend steuernde Spannung in Sperrichtung gepolt. Die zwischen dem Kollektor des Transistors 5 und der Source des Feldeffekttransistors 12 liegende Z-Diode 7 liegt dabei parallel zu der aus dem Widerstand 23 und der Gate-Source-Strecke des Feldeffekttransistors 12 bestehenden Serienschaltung.

Der Widerstand 23 kann bei manchen Feldeffekttransistortypen, insbesondere in Verbindung mit relativ langen Gate-Zuleitungen, zur Unterdrückung von Oszillationen nötig sein. Die Diode 24 verhindert, daß der Feldeffekttransistor 12 im Einschaltzeitpunkt über die parasitäre Drain-Source-Kapazität 15 aufgesteuert wird.

Eine weitere Ergänzung der Schaltungsanordnung nach Fig. 1 besteht in dem Schalter 22. Der Schalter 22 gestattet es, das an den Widerstand 16 gelegte Einschaltpotential umzuschalten. In der dargestellten Schalterstellung gelangt die Eingangsspannung U1 an den Widerstand 16. In der anderen Schalterstellung wird die Hilfsspannung U_{H} an den Widerstand 16 gelegt.

Zwischen dem Schalter 22 und dem Widerstand 23 liegt der Widerstand 16. Der Verbindungspunkt der Widerstände 16 und 23 ist mit dem Kollektor des Transistors 5 verbunden und über die Z-Diode 7 an die Source des Feldeffekttransistors 12 geführt. Die Z-Diode 7 ist derart gepolt, daß sie in bezug auf die vom Schalter 22 über den Widerstand 16 an ihre Kathode gelangende Spannung in Sperrichtung gepolt ist und daher diese Spannung auf den Wert ihrer Zenerspannung begrenzt.

Wird der Widerstand 16 über den Schalter 22 an die Hilfsspannung U_{H} gelegt, so wird die Ansteuerspannung für den Feldeffekttransistor 12 aus der Hilfsspannung U_{H} abgeleitet. Auf diese Weise läßt sich der Feldeffekttransistor 12 unabhängig von der Speisespannung U1 schalten. Damit kann der Feldeffekttransistor 12 als Stellglied für zusätzliche Funktionen wie Überspannungsabschaltung oder definierte Einschaltreihenfolge verschiedener Verbraucher verwendet werden.

Eine weitere Ergänzung der Schaltungsanordnung nach Fig. 1 besteht darin, daß parallel zur Drain-Source-Strecke des Feldeffekttransistors 12 der Widerstand 25 angeordnet ist und parallel zu der aus dem Stromsensor 8 und der Drain-Source-Strecke des Feldeffekttransistors 12 bestehenden Serienschaltung die Z-Diode 26 liegt. Die Z-Diode 26 ist in bezug auf den Strom I1 in Sperrichtung gepolt. Der Widerstand 25 dient als Entlastungswiderstand zur Verringerung der Impulsbelastung des Feldeffekttransistors 12 oder um bei an der Hilfsspannung U_{H} liegendem Widerstand 16 dem Verbraucher auch im abgeschalteten Zustand des Feldeffekttransistors 12 einen geringen Strom, z.B. als Hilfsversorgung, zu liefern, oder um den Kondensator 19 bereits vor dem Einschalten des Feldeffekttransistors 12 langsam aufzuladen.

Die Z-Diode 26 dient zum Schutz des Feldeffekttransistors 12 gegen Überspannungen und gegen inverse Ströme. Sie ist nicht erforderlich, falls der Feldeffekttransistor 12 selbst ein definiertes Avalanche-Verhalten besitzt.

Die Drossel 21 wird insbesondere dann eingesetzt, wenn die nach Fig. 2 zum Zeitpunkt tl beim Laden der parasitären Kapazitäten 13 bis 15 auftretende Stromspitze noch weiter gedämpft werden soll. Dabei genügt ein relativ kleiner Induktivitätswert.

Als Feldeffekttransistor 12 dient nach Fig. 1 ein MOS-FET und als Transistor 5 ein bipolarer Transistor vom Typ npn. Die Schaltungsanordnung zur Strombegrenzung nach Fig. 4 ergibt sich aus der nach Fig. 1 dadurch, daß für den Feldeffekttransistor 12 anstelle eines n-Kanal-MOS-FET ein p-Kanal-MOS-FET und für den Transistor 5 anstelle eines npn-Transistors ein pnp-Transistor Verwendung findet und daß die Serienschaltung aus Drain-Source-Strecke des Feldeffekttransistors 12 und Stromsensor 8 anstatt an den Minuspol an den Pluspol der Versorgungsspannungsquelle geführt ist.

## Patentansprüche

1. Schaltungsanordnung zur Strombegrenzung, die zwischen einer Speisespannungsquelle (2) und einem Speicherkondensator (19) angeordnet ist und in einem Längszweig die Source-Drain-Strecke eines Feldeffektransistors (12, 120) und einen zur Source-Drain-Strecke in Serie liegenden Stromsensor (8, 80) enthält, wobei das Gate des Feldeffekttransistors (12, 120) über einen Widerstand (16, 160) an ein den Feldeffekttransistor (12, 120) leitend steuerndes Einschaltpotential und über die Emitter-Kollektorstrecke eines Transistors (5, 50) an ein den Feldeffekttransistor (12, 120) in den Sperrzustand steuerndes Sperrpotential angeschlossen ist, wobei der Emitter des Transistors (5, 50) an das eine Ende des Stromsensors (8, 80) und die Basis des Transistors (5, 50) über einen Widerstand (6, 60) an das andere Ende des Stromsensors (8, 80) angeschlossen ist, so daß die Emitter-Kollektorstrecke des Transistors (5, 50) bei am Stromsensor (8, 80) abfallenden Spannungen unterhalb einer vorgegebenen Schwellenspannung hochohmig ist und bei am Stromsensor (8, 80) abfallenden Spannungen oberhalb der vorgegebenen Schwellenspannung der Kollektor des Transistors (5, 50) ein den Feldeffekttransistor (12, 120) im Sinne einer Strombegrenzung steuerndes Potential abgibt,
**dadurch gekennzeichnet,**
daß der Stromsensor ((8, 80) eine Drossel (9, 90) enthält, so daß seine Impedanz eine ohmsche und eine induktive Komponente aufweist und daß parallel zum Stromsensor (8, 80) eine in bezug auf den Laststrom (I1) in Sperrichtung gepolte Diode (11, 110) angeordnet ist.

2. Schaltungsanordnung nach Anspruch 1,
**dadurch gekennzeichnet,**
daß in der Gate-Zuleitung des Feldeffekttransistors (12) ein Gatevorwiderstand (23) angeordnet ist und daß parallel zum Gatevorwiderstand (23) eine Diode (24) liegt, die in bezug auf die am Gatevorwiderstand (23) abfallende und den Feldeffekttransistor (12, 120) leitend steuernde Spannung in Sperrichtung gepolt ist.

3. Schaltungsanordnung nach Anspruch 1 oder 2,
**dadurch gekennzeichnet,**
daß zwischen dem Kollektor des Transistors (5, 50) und der Source des Feldeffekttransistor (12, 120) eine in bezug auf die den Feldeffekttrransistor (12, 120) leitend steuernde Spannung in Sperrichtung gepolte Z-Diode (7) angeordnet ist.

4. Schaltungsanordnung nach einem der Ansprüche 1 bis 3,
**dadurch gekennzeichnet,**
daß das Einschaltpotential mit Hilfe eines Schalters (22) zwischen dem Potential einer direkten Verbindung von Speisespannungsquelle (2) und Verbraucher (19, 20) einerseits und einem Hilfspotential (UH) umschaltbar ist.

5. Schaltungsanordnung nach einem der Ansprüche 1 bis 4,
**dadurch gekennzeichnet,**
daß parallel zur Drain-Source-Strecke des Feldeffekttransistors (12, 120) ein Widerstand (25) angeordnet ist.

6. Schaltungsanordnung nach einem der Ansprüche 1 bis 5,
**dadurch gekennzeichnet,**
daß parallel zu der aus dem Stromsensor (8, 80) und der Drain-Source-Strecke des Feldeffekttransistors (12) bestehenden Serienschaltung eine für den Speisestrom (I1) in Sperrichtung gepolte Z-Diode (26) angeordnet ist.

7. Schaltungsanordnung nach einem der Ansprüche 1 bis 6,
**dadurch gekennzeichnet,**
daß die Induktivität der Drossel (9, 90) derart bemessen ist, daß beim Einschalten der sich im passiven Zustand befindlichen Schaltungsanordnung der Hauptanteil des Ladestromes der parasitären Kapazitäten (13, 14, 15)des Feldeffekttransistors (12, 120) über die Emitter-Kollektorstrecke des Transistors (5, 50) fließt.

8. Schaltungsanordnung nach einem der Ansprüche 1 bis 7,
**dadurch gekennzeichnet,**
daß die ohmsche Komponente des Stromsensors (8, 80) derart bemessen ist, daß der Laststrom in Verbindung mit der Schwellenspannung des Transistors (5, 50) auf einen vorgegebenen Wert begrenzt ist.

9. Schaltungsanordnung nach einem der Ansprüche 1 bis 8,
**dadurch gekennzeichnet,**
daß der in der Basiszuleitung des Transistors (5, 50) liegende Widerstand (6, 60) im Hinblick auf das Aufladen der parasitären Kapazitäten (13, 14, 15) des Feldeffekttransistors (12) ausreichend klein und mit Rücksicht auf einen Schutz des Transistors (5, 50) gegen Überlastung ausreichend groß bemessen ist.

10. Schaltungsanordnung nach einem der Ansprüche 1 bis 9,
**dadurch gekennzeichnet,**
daß die ohmsche Komponente des Stromsensors (8, 80) durch den Wicklungswiderstand der Drossel (9, 90) gebildet ist.

## Claims

1. Circuit arrangement for current limiting, which is arranged between a supply voltage source (2) and a storage capacitor (19) and contains, in a series path, the source-drain path of a field-effect transistor (12, 120) and a current sensor (8, 80) connected in series with the source-drain path, the gate of the field-effect transistor (12, 120) being connected via a resistor (16, 160) to a turn-on potential, which switches the field-effect transistor (12, 120) on, and via the emitter-collector path of a transistor (5, 50) to a blocking potential, which switches the field-effect transistor (12, 120) into the off state, the emitter of the transistor (5, 50) being connected to one end of the current sensor (8, 80) and the base of the transistor (5, 50) being connected via a resistor (6, 60) to the other end of the current sensor (8, 80), with the result that the emitter-collector path of the transistor (5, 50) has a high impedance in the event of voltage drops across the current sensor (8, 80) below a predetermined threshold voltage, and, in the event of voltage drops across the current sensor (8, 80) above the predetermined threshold voltage, the collector of the transistor (5, 50) emits a potential which controls the field-effect transistor (12, 120) in the sense of current limiting, characterized in that the current sensor (8, 80) contains an inductor (9, 90), with the result that the impedance of said sensor has a resistive and an inductive component, and in that a diode (11, 110) which is reverse-biased with regard to the load current (I1) is arranged in parallel with the current sensor (8, 80).

2. Circuit arrangement according to Claim 1, characterized in that a gate series resistor (23) is arranged in the gate supply line of the field-effect transistor (12), and in that a diode (24) is connected in parallel with the gate series resistor (23) and is reverse-biased with regard to the voltage which effects a voltage drop across the gate series resistor (23) and switches the field-effect transistor (12, 120) on.

3. Circuit arrangement according to Claim 1 or 2, characterized in that a Z diode (7) which is reverse-biased with regard to the voltage which switches the field-effect transistor (12, 120) on is arranged between the collector of the transistor (5, 50) and the source of the field-effect transistor (12, 120).

4. Circuit arrangement according to one of Claims 1 to 3, characterized in that the turn-on potential can be changed over with the aid of a switch (22) between the potential of a direct connection between the supply voltage source (2) and load (19, 20), on the one hand, and an auxiliary potential (U_{H}).

5. Circuit arrangement according to one of Claims 1 to 4, characterized in that a resistor (25) is arranged in parallel with the drain-source path of the field-effect transistor (12, 120).

6. Circuit arrangement according to one of Claims 1 to 5, characterized in that a Z diode (26) which is reverse-biased for the supply current (I1) is arranged in parallel with the series circuit comprising the current sensor (8, 80) and the drain-source path of the field-effect transistor (12).

7. Circuit arrangement according to one of Claims 1 to 6, characterized in that the inductance of the inductor (9, 90) is rated such that when the circuit arrangement in the passive state is turned on, the main component of the charging current of the parasitic capacitances (13, 14, 15) of the field-effect transistor (12, 120) flows via the emitter-collector path of the transistor (5, 50).

8. Circuit arrangement according to one of Claims 1 to 7, characterized in that the resistive component of the current sensor (8, 80) is rated such that the load current, in connection with the threshold voltage of the transistor (5, 50), is limited to a predetermined value.

9. Circuit arrangement according to one of Claims 1 to 8, characterized in that the resistor (6, 60) situated in the base supply line of the transistor (5, 50) has a rating which is small enough as regards charging of the parasitic capacitances (13, 14, 15) of the field-effect transistor (12) and large enough as regards the protection of the transistor (5, 50) against overloading.

10. Circuit arrangement according to one of Claims 1 to 9, characterized in that the resistive components of the current sensor (8, 80) is formed by the winding resistance of the inductor (9, 90).

## Revendications

1. Montage pour limiter le courant, qui est monté entre une source (2) de tension d'alimentation et un condensateur (19) d'accumulation et qui comporte, dans une branche en série, la section source-drain d'un transistor (12, 120) à effet de champ et un détecteur (8, 80) de courant en série avec la section source-drain, la grille du transistor (12, 120) à effet de champ étant raccordée par l'intermédiaire d'une résistance (16, 160) à un potentiel de fermeture mettant le transistor (12, 120) à effet de champ à l'état passant et, par l'intermédiaire de la section émetteur-collecteur d'un transistor (5, 50), à un potentiel de blocage mettant à l'état bloqué le transistor (12, 120) à effet de champ, l'émetteur du transistor (5, 50) étant raccordé à l'une des extrémités du détecteur (8, 80) de courant et la base du transistor (5, 50) étant raccordée, par l'intermédiaire d'une résistance (6, 60) à l'autre extrémité du détecteur (8, 80) de courant, si bien que la section émetteur-collecteur du transistor (5, 50) est à grande valeur ohmique en cas de tension aux bornes du détecteur (8, 80) de courant s'abaissant au dessous d'une tension seuil prescrite et que le collecteur du transistor (5, 50) fournit un potentiel commandant le transistor (12, 120) à effet de champ en vue d'une limitation de courant en cas de tension aux bornes du détecteur (8, 80) de courant qui s'abaisse en restant supérieur à la tension seuil prescrite, caractérisé en ce que le détecteur (8, 80) de courant comprend une bobine (9, 90), si bien que son impédance comporte une composante ohmique et une composante inductive, et qu'une diode (11, 110) polarisée dans la direction de blocage par rapport au courant (I1) de charge est montée parallèlement au détecteur (8, 80) de courant.

2. Montage suivant la revendication 1, caractérisé en ce qu'il est monté dans la ligne d'alimentation de grille du transistor (12) à effet de champ une résistance (23) série de grille et en ce qu'il est monté en parallèle à la résistance (23) série de grille une diode qui est polarisée dans la direction de blocage par rapport à la tension qui s'abaisse aux bornes de la résistance (23) série de grille et qui met le transistor (12, 120) à effet de champ à l'état passant.

3. Montage suivant la revendication 1 ou 2, caractérisé en ce qu'il est monté entre le collecteur du transistor (5, 50) et la source du transistor (12, 120) à effet de champ une diode (7) de Zener polarisée dans la direction de blocage par rapport à la tension mettant le transistor (12, 120) à effet de champ commandé à l'état passant.

4. Montage suivant l'une des revendications 1 à 3, caractérisé en ce que le potentiel de fermeture peut être commuté entre le potentiel d'une liaison directe de la source (2) d'alimentation et de l'appareil (19, 20) utilisateur, d'une part, et un potentiel (UH) auxiliaire par l'intermédiaire d'un commutateur (22).

5. Montage suivant l'une des revendications 1 à 4, caractérisé en ce qu'une résistance (25) est montée en parallèle à la section drain-source du transistor (12, 120) à effet de champ.

6. Montage suivant l'une des revendications 1 à 5, caractérisé en ce qu'une diode (26) Zener polarisée dans la direction de blocage pour le courant (I1) d'alimentation est montée parallèlement au circuit-série constitué du détecteur (8, 80) de courant et de la section drain-source du transistor (12) à effet de champ.

7. Montage suivant l'une des revendications 1 à 6, caractérisé en ce la valeur de l'inductance de la bobine (9, 90) est prévue de telle manière que, lors de la fermeture du montage se trouvant à l'état passif, la composante principale du courant de charge des capacités (13, 14, 15) parasitaires du transistor (12, 120) à effet de champ passe par la section émetteur-collecteur du transistor (5, 50).

8. Montage suivant l'une des revendications 1 à 7, caractérisé en ce la valeur de la composante ohmique du détecteur (8, 80) de courant est prévue de telle manière que le courant de charge soit limité à une valeur prescrite en liaison avec la tension seuil du transistor (5, 50).

9. Montage suivant l'une des revendications 1 à 8, caractérisé en ce la résistance (6, 60) se trouvant dans la ligne d'alimentation de base du transistor (5, 50) est prévue suffisamment petite en ce qui concerne la charge des capacités (13, 14, 15) parasitaires du transistor (12) à effet de champ et suffisamment grande pour protéger d'une surcharge eu égard à une protection du transistor (5, 50).

10. Montage suivant l'une des revendications 1 à 9, caractérisé en ce la composante ohmique du détecteur (8, 80) de courant est formée par la résistance d'enroulement de la bobine (9, 90).
